# EUROPÄISCHE PATENTSCHRIFT

(11) **EP 3 388 626 B1**
(45) Veröffentlichungstag und Bekanntmachung des Hinweises auf die Patenterteilung: **13.11.2019**
(21) Anmeldenummer: 17166316.4
(22) Anmeldetag: 12.04.2017
(51) Int. Cl.: F01D 5/14, F01D 9/04

(54) **KONTURIERUNG EINER SCHAUFELGITTERPLATTFORM**
CONTOURING OF A BLADE ROW PLATFORM
CONTOURNAGE D'UNE PLATE-FORME DE GRILLE D'AUBE

(43) Veröffentlichungstag der Anmeldung: 17.10.2018
(73) Patentinhaber: MTU Aero Engines AG, 80995 München (DE)
(72) Erfinder: Brettschneider, Markus, 85757 Karlsfeld (DE); Mahle, Inga, 77880 Sasbach (DE); Maatouk, Fadi, 80807 München (DE)

(56) Entgegenhaltungen:
- EP-A1- 2 487 329
- WO-A2-2014/074190
- US-A1- 2013 224 027

## Beschreibung

Die vorliegende Erfindung betrifft ein Schaufelgittersegment, ein Schaufelgitter, eine Plattform und einen Schaufelkanal einer Strömungsmaschine sowie eine Strömungsmaschine und ein Flugzeugtriebwerk.

Strömungsmaschinen (wie Gas- und Dampfturbinen) weisen regelmäßig einen Strömungskanal zur Durchführung eines Fluids auf. Der Strömungskanal, der auch als "Ringraum" bezeichnet wird, ist nach radial innen durch die Welle eines Rotors begrenzt und nach radial außen durch ein Gehäuse; die Bezeichnungen "radial" ebenso wie "axial" und "Umfangsrichtung" sowie davon abgeleitete Begriffe sind in dieser Schrift - sofern nichts anderes angegeben ist - in Bezug auf eine Rotationsachse des Rotors zu verstehen.

Im Ringraum einer Strömungsmaschine sind Schaufelgitter angeordnet (für die auch die Bezeichnung "Schaufelkranz" üblich ist). Sie umfassen jeweils Leit- oder Laufschaufeln, die in Umfangsrichtung in im Wesentlichen regelmäßigen Abständen hintereinanderliegen, sowie zugehörige Plattformen, die auch als "Deckplatten" bezeichnet werden und die in der Regel jeweils eine anströmseitige und eine abströmseitige Plattformkante aufweisen. Diese Plattformkanten begrenzen die Plattformoberfläche in axialer Richtung; als "Plattformoberfläche" wird dabei in dieser Schrift die dem Ringraum zugewandte Oberfläche der Plattform bezeichnet.

Der Rand der Plattform, den der im Betrieb durch den Ringraum der Strömungsmaschine führende (axiale) Hauptstrom zuerst passiert, wird in dieser Schrift "anströmseitige" Plattformkante genannt; als "abströmseitige" Plattformkante wird entsprechend der gegenüber liegende Rand bezeichnet. Die Angaben "stromab" bzw. "stromauf" beziehen sich entsprechend auf die axiale Hauptstromrichtung und dabei lediglich auf die axiale Position, also ungeachtet einer möglichen Verschiebung in Umfangs- oder radialer Richtung: Insbesondere ist ein Punkt in dieser Schrift als "stromab der Anströmkanten" (oder als "stromab eines anderen Punktes") liegend zu verstehen, wenn er im Vergleich zu einer direkten Verbindung der Anströmkanten (miteinander) an der Plattformoberfläche (bzw. im Vergleich zum anderen Punkt) axial in/mit Hauptstromrichtung (also ihr folgend) versetzt angeordnet ist; Analoges gilt für die Bezeichnung "stromauf" (mit entgegengesetzter Richtung).

Der Abschnitt der Plattformoberfläche, der in axialer Richtung durch die direkten (also in Umfangsrichtung ohne axiale Abweichungen verlaufenden) Verbindungen der Anströmkanten bzw. der Abströmkanten benachbarter Schaufelblätter an der Plattformoberfläche begrenzt ist und in Umfangsrichtung durch die Druckseite des einen und die Saugseite des anderen Schaufelblattes, wird in dieser Schrift als "Schaufelzwischenstreifen" bezeichnet. Die Breite des Schaufelzwischenstreifens in Umfangsrichtung an den Anströmkanten wird "Teilungsabstand" (des Schaufelgitters bzw. eines Schaufelgittersegments bzw. der Schaufelblätter) genannt. Er kann insbesondere als Abstand der Anströmkanten benachbarter Schaufeln in Umfangsrichtung im Bereich der Plattformoberfläche gemessen werden. Der (allein) in axialer Richtung (der Richtung des vorgesehenen axialen Hauptstroms) gemessene Abstand der Anströmkanten der Schaufelblätter von ihren Abströmkanten wird (axiale) "Gitterbreite" genannt.

Die Druckseite eines Schaufelblattes und die Saugseite eines benachbarten Schaufelblattes begrenzen in Umfangsrichtung jeweils einen sogenannten Schaufelkanal. In radialer Richtung wird dieser Schaufelkanal innerhalb der Strömungsmaschine durch sogenannte Seitenwände begrenzt. Diese werden zum einen jeweils durch die Plattformen gebildet, zum anderen durch diesen Plattformen radial gegenüberliegende Abschnitte: Im Falle von Laufschaufeln ist eine derartige gegenüberliegende Seitenwand dabei ein radial außen liegender Abschnitt (insbesondere des Gehäuses), im Falle von Leitschaufeln ein radial innen liegender Abschnitt (insbesondere einer Rotornabe).

Eine durch einen Strömungskanal geführte Fluidströmung wird regelmäßig durch die Oberflächen der Seitenwände beeinflusst. Strömungsschichten, die nahe an diesen Oberflächen verlaufen, werden dabei aufgrund ihrer geringeren Geschwindigkeit stärker abgelenkt als von den Seitenwänden fernere Strömungsschichten. So entsteht eine Sekundärströmung, die einem axialen Hauptstrom überlagert ist und die insbesondere zu Wirbeln und Druckverlusten führt.

Zur Verringerung der Sekundärströmungen werden in die Seitenwände häufig Konturierungen in Form von Erhebungen und/oder Vertiefungen eingebracht.

Aus dem Stand der Technik ist eine Vielzahl von derartigen sogenannten "Seitenwandkonturierungen" bekannt. Exemplarisch seien die Patente bzw. Patentanmeldungen der Anmelderin EP 2 487 329 B1, EP 2 787 172 A2, und EP 2 696 029 B1 genannt. Die letztgenannte Schrift offenbart dabei ein Schaufelgitter mit einer Seitenwandkonturierung, die eine druckseitige Erhebung und eine saugseitige Vertiefung aufweist, wobei ein höchster Abschnitt der Erhebung und ein tiefster Abschnitt der Vertiefung in einem Bereich von 30% bis 60% einer Erstreckung der Schaufelblätter in Axialrichtung liegen und sich voneinander um maximal 10% in Axialrichtung unterscheiden.

Die Druckschrift EP 2 136 033 A1 offenbart eine Seitenwandkonturierung, bei der zwischen je zwei Schaufelblättern eine Vertiefung angeordnet ist, die eine Rinne in der Plattformoberfläche ausgebildet.

Aus der EP 2 423 444 A2 ist eine Seitenwandkonturierung bekannt, bei der an der Druckseite eines ersten Schaufelblattes eine Erhebung angeordnet ist und sich parallel zur Saugseite eines benachbarten Schaufelblattes eine Vertiefung erstreckt. Die Erhebung und die Vertiefung bilden dabei einen gebogenen Kanal aus.

Die EP 3 064 706 A1 offenbart eine Leitschaufelreihe mit unterschiedlich ausgebildeten Schaufelkanälen.

Aufgabe der vorliegenden Erfindung ist es, eine Technik bereitzustellen, mit der Sekundärströme im Ringraum einer Strömungsmaschine auf vorteilhafte Weise weiter reduziert werden können.

Die Aufgabe wird gelöst durch einen Schaufelgittersegment gemäß Anspruch 1, ein Schaufelgitter nach Anspruch 12, einen Schaufelkanal gemäß Anspruch 13, eine Plattform gemäß Anspruch 14 und eine Strömungsmaschine nach Anspruch 15. Vorteilhafte Ausführungsformen sind in den Unteransprüchen, der Beschreibung und den Figuren offenbart.

Ein erfindungsgemäßes Schaufelgittersegment für ein Schaufelgitter (z.B. ein Laufschaufelgitter oder ein Leitschaufelgitter) einer Strömungsmaschine umfasst eine Plattform mit einer Plattformoberfläche sowie ein erstes und ein (vorzugsweise im Schaufelgitter zum ersten benachbartes) zweites Schaufelblatt. Die Plattformoberfläche weist eine erste und eine zweite Erhebung auf.

Die erste Erhebung reicht bis an die Druckseite des ersten Schaufelblattes heran, weist also eine (in Bezug auf eine nicht konturierte Plattformoberfläche) auf Nullniveau liegende Begrenzung auf, die von der Druckseite des ersten Schaufelblattes in den Schaufelzwischenstreifen hinein und wieder zur Druckseite des ersten Schaufelblattes führt und dabei die erste Erhebung mindestens teilweise umläuft. Dabei kann eine Grenzlinie zwischen der Druckseite des ersten Schaufelblattes und der Plattformoberfläche mindestens in einem Abschnitt auf der ersten Erhebung verlaufen (so dass dort also das erste Schaufelblatt an seiner Druckseite auf der ersten Erhebung fußt), oder die Begrenzung kann eine geschlossene Kurve bilden, die dann also in mindestens einem Punkt mit der Grenzlinie zwischen dem ersten Schaufelblatt und der Plattformoberfläche übereinstimmt.

Die zweite Erhebung reicht bis an die Saugseite des zweiten Schaufelblattes heran, weist also analog eine (in Bezug auf eine nicht konturierte Plattformoberfläche) auf Nullniveau liegende Begrenzung auf, die von der Saugseite des zweiten Schaufelblattes in den Schaufelzwischenstreifen hinein und wieder zur Saugseite des ersten Schaufelblattes führt und dabei die zweite Erhebung mindestens teilweise umläuft. Dabei kann eine Grenzlinie zwischen der Saugseite des zweiten Schaufelblattes und der Plattformoberfläche kann also (analog zum Obigen) mindestens in einem Abschnitt auf der zweiten Erhebung verlaufen (so dass dort das zweite Schaufelblatt an seiner Saugseite auf der zweiten Erhebung fußt) oder die Begrenzung kann eine geschlossene Kurve bilden, die dann also in mindestens einem Punkt mit der Grenzlinie zwischen dem zweiten Schaufelblatt und der Plattformoberfläche übereinstimmt.

Die jeweils auf Nullniveau verlaufende Begrenzung der jeweiligen Erhebung kann diese also auf der Plattformoberfläche vollständig umlaufen oder zusammen mit einem Abschnitt der Grenzlinie zwischen Plattformoberfläche und Druck- bzw. Saugseite des jeweiligen Schaufelblattes die Erhebung umranden.

Bei einem erfindungsgemäßen Schaufelgittersegment unterscheidet sich ein am weitesten stromab liegender Punkt der Begrenzung der zweiten Erhebung in seiner axialen Position von der axialen Position mindestens eines höchsten Punktes der ersten Erhebung um maximal 10% der (wie oben definierten) axialen Gitterbreite, d.h. die Differenz der genannten axialen Positionen in einem Koordinatensystem mit einer axial verlaufenden Koordinatenachse beträgt höchstens 10% der (entsprechend gemessenen) axialen Gitterbreite.

Als "Erhebung" ist in dieser Schrift eine lokale Ausformung (wie beispielsweise ein Buckel bzw. Vorsprung) der Plattformoberfläche zu verstehen, in der sich die Plattformoberfläche (im Vergleich zu einer Plattformoberfläche einer nicht konturierten Plattform, die in dieser Schrift als das "Nullniveau" darstellend verstanden wird) radial in dieselbe Richtung erstreckt, in der auch die Schaufelblätter von der Plattform abstehen. Bei einer Erhebung auf einer den Ringraum nach radial außen begrenzenden Plattform erstreckt sich eine Erhebung also nach radial innen, bei einer Erhebung auf einer den Ringraum nach radial innen begrenzenden Plattform nach radial außen.

Als "Vertiefung" ist (weiter unten) analog eine lokale Ausformung der Plattformoberfläche in die entgegengesetzte Richtung zu verstehen (wie z.B. eine Senke bzw. Nische). Bei einer Erhebung auf einer den Ringraum nach radial außen begrenzenden Plattform erstreckt sich eine Vertiefung also d.h. nach radial außen, bei einer Vertiefung auf einer den Ringraum nach radial innen begrenzenden Plattform nach radial innen.

Den Bezeichnungen "Erhebung" und "Vertiefung" (ebenso wie Begriffen wie "Höhe", "Tiefe" oder ähnlichem) liegt hier also eine Orientierung bzw. ein Koordinatensystem zugrunde, bei der/dem sich die Schaufelblätter und eine Erhebung von der Plattformoberfläche jeweils nach "oben" erstrecken. Dementsprechend erstreckt sich eine Vertiefung in die entgegengesetzte Richtung nach "unten".

Als höchster bzw. (weiter unten im Text) tiefster Punkt wird jeweils ein Punkt einer Erhebung bzw. Vertiefung verstanden, in denen sich diese am weitesten in die jeweilige Richtung erstreckt. Die höchsten bzw. tiefsten Punkte einer Erhebung bzw. Vertiefung können jeweils einen Flächenabschnitt oder eine Kurve ausbilden oder singulär sein. Gemäß einer exemplarischen Ausführungsform weisen/weist die erste und/oder die zweite Erhebung genau einen höchsten Punkt auf.

Ein erfindungsgemäßes Schaufelgittersegment kann einteilig oder zusammengesetzt sein. Insbesondere kann die Plattform einteilig sein oder zwei oder mehr Teile umfassen, von denen jeweils eines der Schaufelblätter absteht, oder die Plattform kann als separates Bauteil ausgebildet sein, das zwischen den Schaufelblättern angeordnet ist oder werden kann. Entsprechend ist eine erfindungsgemäße Plattform dazu eingerichtet, in Umfangsrichtung an jeder Seite an ein Schaufelblatt anzugrenzen und mit den Schaufelblättern (von denen keines, eines oder beide fest an die Plattform angeformt sein kann) zusammen ein erfindungsgemäßes Schaufelgittersegment gemäß einer der in dieser Schrift offenbarten Ausführungsformen auszubilden. Die Plattform kann dazu eingerichtet sein, mit ihrer anströmseitigen Plattformkante (mindestens im Wesentlichen) angrenzend an ein weiteres (separates) Element (z.B. der Nabe oder des Gehäuses oder eines anderen Schaufelgitters) in der Strömungsmaschine verwendet zu werden. Die anströmseitige Plattformkante kann dazu eingerichtet sein, einen Abschnitt einer Wandung eines Spaltes auszubilden, durch den Kühlungsfluid in den Ringraum der Strömungsmaschine eingeleitet wird bzw. werden kann.

Ein erfindungsgemäßes Schaufelgitter umfasst mindestens ein erfindungsgemäßes Schaufelgittersegment gemäß einer der in dieser Schrift offenbarten Ausführungsformen. Eine erfindungsgemäße Strömungsmaschine umfasst ein oder mehrere erfindungsgemäße(s) Schaufelgitter.

Ein erfindungsgemäßer Schaufelkanal führt durch ein erfindungsgemäßes Schaufelgittersegment gemäß einer der in dieser Schrift offenbarten Ausführungsformen, ist also durch ein derartiges Schaufelgittersegment sowie eine dessen Plattform gegenüberliegende (der Plattformoberfläche zugewandte) Seitenwand begrenzt. In Umfangsrichtung ist ein erfindungsgemäßer Schaufelkanal durch die Druckseite eines der Schaufelblätter des Schaufelgittersegments und durch die dieser gegenüberliegende Saugseite des (benachbarten) anderen der Schaufelblätter begrenzt.

Ein erfindungsgemäßes Schaufelgittersegment, ein erfindungsgemäßes Schaufelgitter, ein erfindungsgemäßer Schaufelkanal, eine erfindungsgemäße Plattform und eine erfindungsgemäße Strömungsmaschine beeinflussen durch die erfindungsgemäße Geometrie der Plattformoberfläche das statische Druckfeld an der Plattformoberfläche und auf die Schaufeln im Randbereich. Dadurch wird jeweils eine Reduktion der Sekundärströmung, insbesondere von Wirbeln im Schaufelkanal ermöglicht. So können Verluste verringert und die Zuströmung in ein ggf. stromab liegendes weiteres Schaufelgitter verbessert werden.

Das Schaufelgittersegment bzw. das Schaufelgitter bzw. der Strömungskanal bzw. die Plattform können insbesondere Teil einer Niederdruckturbine bzw. dazu eingerichtet sein, in einer Niederdruckturbine eingebaut bzw. verwendet zu werden. Die Schaufelblätter können jeweils Leit- oder Laufschaufelblätter sein. Die Plattform kann dazu eingerichtet sein, einen Schaufelkanal durch das Schaufelgittersegment nach radial innen oder nach radial außen zu begrenzen.

Bei einer vorteilhaften Weiterbildung der vorliegenden Erfindung weist die (auf Nullniveau liegende) Begrenzung der ersten Erhebung mindestens einen am weitesten stromab liegenden Punkt auf, der mindestens 50% und/oder höchstens 85% (oder sogar höchstens 65%) der axialen Gitterbreite stromab der Anströmkanten der Schaufelblätter liegt. Es hat sich gezeigt, dass dadurch die Sekundärströmung durch das Schaufelgitter besonders vorteilhaft beeinflusst werden kann.

Mindestens ein am weitesten stromauf liegender Punkt der Begrenzung der ersten Erhebung kann eine axiale Position haben, die höchstens 10% oder höchstens 5% der axialen Gitterbreite stromab der Anströmkanten der Schaufelblätter angeordnet ist.

Eine axiale Ausdehnung der ersten Erhebung, also ein Abstand der axialen Positionen eines am weitesten stromab und eines am weitesten stromauf liegenden Punktes der (auf Nullniveau liegenden) Begrenzung der ersten Erhebung ist vorzugsweise mindestens doppelt so groß wie eine axiale (entsprechend gemessene) Ausdehnung der zweiten Erhebung.

Eine Ausdehnung der ersten Erhebung in Umfangsrichtung, also ein von allen Punkten der Begrenzung der ersten Erhebung maximaler in Umfangsrichtung gemessener Abstand zur Druckseite der ersten Schaufelblattes beträgt vorzugsweise höchstens zwei Drittel oder höchstens die Hälfte des Teilungsabstandes des Schaufelgittersegments, und/oder mindestens ein Viertel oder mindestens ein Drittel des Teilungsabstandes des Schaufelgittersegments.

Eine Ausdehnung der zweiten Erhebung in Umfangsrichtung, die sich analog als ein von allen Punkten der Begrenzung der zweiten Erhebung maximaler in Umfangsrichtung gemessener Abstand zur Saugseite der zweiten Schaufelblattes ergibt, beträgt bevorzugt höchstens ein Fünftel oder höchstens ein Neuntel des Teilungsabstandes des Schaufelgittersegments. Infolge der durch die jeweiligen Krümmungen der Druckseite des ersten und der Saugseite des zweiten Schaufelblattes bewirkten Strömung können Kanalwirbel bei den genannten Ausdehnungen der Erhebungen (einzeln oder in Kombination) besonders wirkungsvoll reduziert werden.

Als vorteilhaft hat sich eine Ausführungsvariante erwiesen, bei der die Begrenzung der zweiten Erhebung mindestens einen am weitesten stromauf liegenden Punkt aufweist, dessen axiale Position höchstens 10% oder höchstens 5% der axialen Gitterbreite stromab der Anströmkanten der Schaufelblätter angeordnet ist.

Ein in Umfangsrichtung gemessener Abstand des mindestens einen höchsten Punktes der ersten Erhebung von der Druckseite des ersten Schaufelblattes und/oder ein in Umfangsrichtung gemessener Abstand mindestens eines höchsten Punktes der zweiten Erhebung von der Saugseite des zweiten Schaufelblatte beträgt vorzugsweise höchstens 10% oder höchstens 5% eines Teilungsabstandes des Schaufelgittersegments. Insbesondere kann ein höchster Punkt der ersten Erhebung auf einer Grenzlinie zwischen der Druckseite des ersten Schaufelblattes und der Plattformoberfläche liegen, und/oder ein höchster Punkt der zweiten Erhebung kann auf einer Grenzlinie zwischen der Saugseite des zweiten Schaufelblattes und der Plattformoberfläche liegen (so dass der genannte, in Umfangsrichtung gemessene Abstand jeweils Null beträgt). Bei einer derartigen Nähe des höchsten Punktes zum jeweiligen Schaufelblatt ist eine Rinne auf der Plattformoberfläche zwischen dem höchsten Punkt der ersten Erhebung und der Druckseite des ersten Schaufelblattes bzw. zwischen dem höchsten Punkt der zweiten Erhebung und der Saugseite des zweiten Schaufelblattes entsprechend schmal oder gar nicht ausgebildet, was sich vorteilhaft auf die Sekundärströmung auswirken kann.

In Umfangsrichtung zwischen mindestens einem Teil der ersten Erhebung und mindestens einem Teil der zweiten Erhebung kann die Plattformoberfläche eine Nullhöhenfläche aufweisen, also einen Oberflächenabschnitt, der vollständig auf Nullniveau liegt. Insbesondere kann sich eine derartige Nullhöhenfläche zwischen der ersten und der zweiten Erhebung hindurch von einer anströmseitigen Plattformkante bis zur abströmseitigen Plattformkante erstrecken.

Gemäß einer vorteilhaften Ausführungsform weist die Plattformoberfläche eine Vertiefung auf, die stromab der zweiten Erhebung an die Saugseite des zweiten Schaufelblattes heranreicht; eine Grenzlinie zwischen der Saugseite des zweiten Schaufelblattes und der Plattformoberfläche kann also (analog zum Obigen) in einem Abschnitt stromab der zweiten Erhebung in der Vertiefung verlaufen (so dass dann also das zweite Schaufelblatt an seiner Saugseite teilweise in der Vertiefung fußt) oder in mindestens einem Punkt stromab der zweiten Erhebung mit einer auf Nullniveau liegenden Begrenzung der Vertiefung übereinstimmen. Mindestens ein Bereich der Vertiefung ist vorzugsweise in Umfangsrichtung zwischen der ersten und der zweiten Erhebung angeordnet.

Die erste und/oder die zweite Erhebung können/kann an die Vertiefung heranreichen. Beispielsweise können/kann die erste und/oder die zweite Erhebung in einem Bereich der Plattformoberfläche in die Vertiefung übergehen, dort also lediglich durch eine (auf der Plattformoberfläche liegende) Kurve getrennt sein (die dann also eine Nullhöhenlinie beschreibt). In axialer Richtung hat eine die erste Erhebung und die Vertiefung trennende derartige Kurve vorzugsweise eine Ausdehnung von mindestens 20%, mindestens 30% oder sogar mindestens 50% der axialen Gitterbreite haben.

Alternativ oder zusätzlich kann die Plattformoberfläche mindestens eine unkonturierte (also eine Nullfläche beschreibende) Teilfläche aufweisen, die mindestens einen Bereich der ersten und/oder der zweiten Erhebung in Umfangsrichtung von der Vertiefung trennt.

Mindestens ein tiefster Punkt der Vertiefung kann stromauf oder stromab mindestens eines höchstens Punktes der ersten Erhebung angeordnet sein oder in axialer Richtung im Wesentlichen gleichauf mit einem höchsten Punkt der ersten Erhebung liegen.

Gemäß einer vorteilhaften Ausführungsform unterscheidet sich eine axiale Position mindestens eines tiefsten Punktes der Vertiefung von der axialen Position mindestens eines höchsten Punktes der ersten Erhebung um maximal 15% oder maximal 10% der axialen Gitterbreite (so dass also die Differenz der genannten axialen Positionen in einem Koordinatensystem mit einer axial verlaufenden Koordinatenachse höchstens 15% bzw. 10% der (entsprechend gemessenen) axialen Gitterbreite beträgt). Der tiefste Punkt der Vertiefung, der höchste Punkt der ersten Erhebung und der am weitesten stromab liegende Punkt der zweiten Erhebung sind dabei also in einem sich in Umfangsrichtung erstreckenden Streifen der Plattformoberfläche angeordnet, dessen axiale Breite höchstens 25% oder höchstens 20% der axialen Gitterbreite beträgt.

Ein am weitesten stromauf liegender Punkt einer (von der Saugseite des zweiten Schaufelblattes in den Schaufelzwischenstreifen hinein und wieder zur Saugseite des zweiten Schaufelblattes führenden und auf Nullniveau liegenden) Begrenzung der Vertiefung kann vorzugsweise höchstens 5% der axialen Gitterbreite stromab der Anströmkanten der Schaufelblätterliegen, im Wesentlichen eine mit den Anströmkanten gemeinsame axiale Position haben oder sogar stromauf der Anströmkanten der Schaufelblätter angeordnet sein. Insbesondere kann die Vertiefung stromauf der ersten und/oder der zweiten Erhebung an das erste bzw. das zweite Schaufelblatt heranreichen, beispielsweise an dessen Anströmkante.

Im Folgenden werden bevorzugte Ausführungsbeispiele der Erfindung anhand von Zeichnungen näher erläutert. Es versteht sich, dass einzelne Merkmale oder Eigenschaften auch anders kombiniert werden können als dargestellt. Bezugszeichen für einander entsprechende Elemente sind figurenübergreifend verwendet und werden ggf. nicht für jede Figur neu beschrieben.

Es zeigen schematisch:
- Figur 1:: ein Schaufelgittersegment einer exemplarischen Ausführungsform der vorliegenden Erfindung in Draufsicht; und
- Figur 2:: ein Schaufelgittersegment einer alternativen exemplarischen Ausführungsform der vorliegenden Erfindung in Draufsicht.

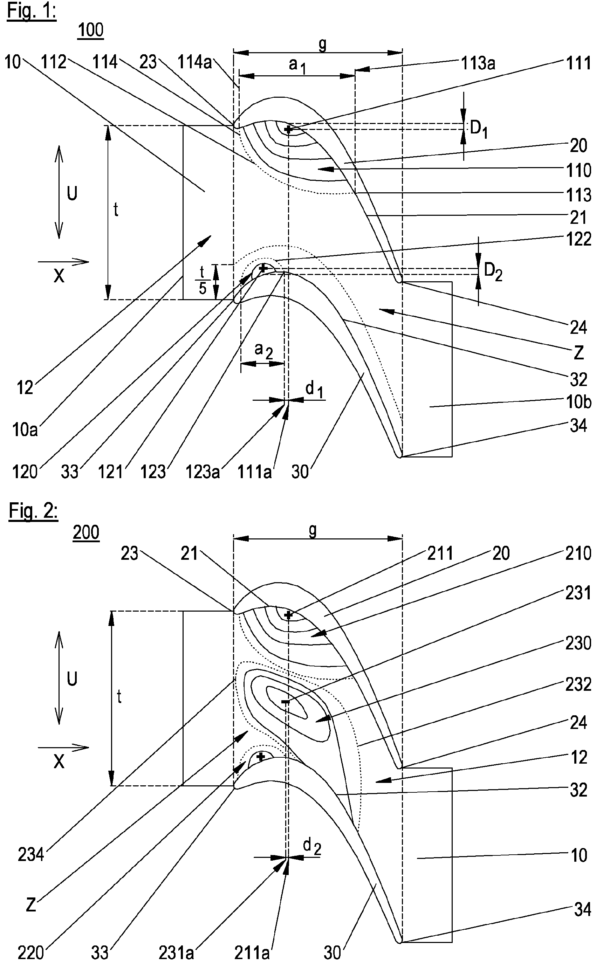

In Figur 1 ist in Draufsicht (mit radialer Blickrichtung) schematisch eine exemplarische, abgewickelte Ausführungsform eines erfindungsgemäßen Schaufelgittersegments 100 dargestellt. Es umfasst Schaufelblätter 20, 30, die jeweils eine Druckseite und eine Saugseite aufweisen, sowie eine erfindungsgemäße Plattform 10 mit einer Plattformoberfläche 12, einer (bezogen auf die vorgesehene Hauptstromrichtung X) anströmseitigen Plattformkante 10a und einer abströmseitigen Plattformkante 10b. Die Plattform kann einteilig oder beispielsweise zweiteilig ausgebildet sein (nicht dargestellt), insbesondere kann sie zwei Teile umfassen, von denen jeweils eines der Schaufelblätter 20, 30 absteht.

Die Schaufelblätter definieren einen Schaufelzwischenstreifen Z als den Oberflächenabschnitt, der in Umfangsrichtung U zwischen der Druckseite 21 des ersten Schaufelblattes 20 und der Saugseite 32 des zweiten Schaufelblattes 30 liegt und der in axialer Richtung X anströmseitig durch eine Verbindung der Anströmkanten 23, 33 der Schaufelblätter 20, 30 und abströmseitig durch eine Verbindung der jeweiligen Abströmkanten 24, 34 begrenzt wird. Die genannten Verbindungen verlaufen dabei auf der Plattformoberfläche 12 rein in Umfangsrichtung U (also ohne Abweichung in axialer Richtung), und sie haben einen Abstand voneinander, welcher der axialen Gitterbreite g des Schaufelgittersegments entspricht. Ein Teilungsabstand t ist als der Abstand der Anströmkanten 23, 33 voneinander an der Plattformoberfläche definiert.

Die Plattformoberfläche 12 weist im Schaufelzwischenstreifen Z eine erste Erhebung 110 und eine zweite Erhebung 120 auf, die in der Figur 1 jeweils durch Höhenlinien kenntlich gemacht sind. Die erste Erhebung 110 reicht bis an die Druckseite 21 des ersten Schaufelblattes 20 heran und die zweite Erhebung bis an die Saugseite 32 des zweiten Schaufelblattes 30. Im gezeigten Ausführungsbeispiel fußt das erste Schaufelblatt 20 an seiner Druckseite 21 sogar auf der Erhebung, eine Grenzlinie zwischen der Plattformoberfläche 12 und der genannten Druckseite 21 läuft also teilweise auf der Erhebung 110. Das zweite Schaufelblatt 30 fußt im gezeigten Beispiel analog an seiner Saugseite 32 auf der zweiten Erhebung 120.

Die erste Erhebung weist eine Begrenzung 112 auf Nullniveau auf. Die Begrenzung 112 erstreckt sich dabei von der Druckseite 21 des ersten Schaufelblattes 20 in den Schaufelzwischenstreifen Z hinein und wieder zur Druckseite 21. Die Begrenzung 112 und ein Abschnitt der Grenzlinie zwischen Plattformoberfläche 12 und Druckseite 21 umranden dabei zusammen die erste Erhebung 110.

Analog weist die zweite Erhebung 120 eine Begrenzung 122 auf, die auf Nullniveau liegt und die ausgehend von einer ersten Stelle an der Saugseite 32 des zweiten Schaufelblattes 30 in den Schaufelzwischenstreifen Z hinein und zu einer zweiten Stelle an der Saugseite 32 des zweiten Schaufelblattes führt. Die Begrenzung 122 und ein Abschnitt der Grenzlinie zwischen Plattformoberfläche 12 und Saugseite 32 umranden zusammen daher die zweite Erhebung 120.

Die erste Erhebung 110 weist einen höchsten Punkt 111 auf. In Umfangsrichtung U gemessen hat der höchste Punkt 111 bei dem in Figur 1 gezeigten Schaufelgittersegment 100 einen Abstand D₁ von der Druckseite 21 des ersten Schaufelblattes 20, wobei D₁ ≤ t/10 gilt. Der Abstand D₁ beträgt somit bei dieser Ausführungsform höchstens 10% des Teilungsabstandes t.

Die axiale Position 111a des höchsten Punktes 111 der ersten Erhebung weist zur axialen Position 123a eines am weitesten stromab liegenden Punktes 123 der Begrenzung 122 der zweiten Erhebung 120 einen Abstand d₁ auf. Dabei gilt erfindungsgemäß d₁ ≤ 0,1g, d.h. der höchste Punkt 111 der ersten Erhebung unterscheidet sich von einem am weitesten stromab liegenden Punkt 123 der Begrenzung 122 der zweiten Erhebung um maximal 10% der axialen Gitterbreite g.

Die zweite Erhebung 120 weist im gezeigten Beispiel ebenfalls einen höchsten Punkt 121 auf. Dieser hat in Umfangsrichtung U gemessen einen Abstand D₂ von der Saugseite 32 des zweiten Schaufelblattes 30, wobei D₂ ≤ t/10 gilt. Der Abstand D₂ beträgt somit bei dieser Ausführungsform höchstens 10% des Teilungsabstandes t.

Die erste Erhebung 110 hat eine axiale Ausdehnung a₁, die durch den Abstand der axialen Position 114a eines am weitesten stromauf liegenden Punktes 114 von der axialen Position 113a eines am weitesten stromab liegenden Punktes 113 der Begrenzung 112 bestimmt ist. Der am weitesten stromab liegende Punkt 113 ist dabei höchstens 85% (oder sogar höchstens 65%) der axialen Gitterbreite g stromab der Anströmkanten 23, 33 der Schaufelblätter angeordnet; die Differenz aus der axialen Position 113a des Punktes 113 und der axialen Position jeder der Anströmkanten beträgt also höchstens 0,85g (bzw. 0,65g). Der am weitesten stromauf liegende Punkt 114 der Begrenzung 112 liegt beim exemplarischen Schaufelgittersegment 100 höchstens 10% Gitterbreite g stromab der Anströmkanten 23, 33 der Schaufelblätter.

Die zweite Erhebung 120 hat eine analog durch den axialen Abstand eines am weitesten stromauf von dem am weitesten stromab liegenden Punkt 123 ihrer Begrenzung 122 definierte axiale Ausdehnung a₂. Im dargestellten vorteilhaften Ausführungsbeispiel gilt a₁ ≥ 2a₂.

In Umfangsrichtung U dehnt sich die zweite Erhebung 120 um weniger als ein Fünftel des Teilungsabstandes t aus. Von allen Punkten der Begrenzung 122 der zweiten Erhebung 120 hat also keiner einen in Umfangsrichtung gemessenen Abstand zur Saugseite, der größer als t/5 wäre; dies ist in der Figur 1 durch eine gepunktete Linie gekennzeichnet, die einen entsprechenden Bereich an der Saugseite 32 des zweiten Schaufelblattes 30 markiert.

Wie weiterhin aus der Figur 1 ersichtlich ist, hat die erste Erhebung 110 in Umfangsrichtung U eine Ausdehnung, die weniger als die Hälfte des Teilungsabstandes t beträgt. Kein Punkt der Begrenzung 112 der ersten Erhebung 110 hat also einen in Umfangsrichtung U gemessenen Abstand von der Druckseite 21 des ersten Schaufelblattes 20, der größer oder gleich dem halben Teilungsabstand wäre.

Figur 2 zeigt eine alternative Ausführungsform eines abgewickelten erfindungsgemäßen Schaufelgittersegments 200 in Draufsicht (mit radialer Blickrichtung). Es umfasst wie das in Figur 1 gezeigte Schaufelgittersegment 100 Schaufelblätter 20, 30 und eine erfindungsgemäße Plattform 10 mit einer einen Schaufelzwischenstreifen Z umfassenden Plattformoberfläche 12.

Die Plattformoberfläche des in Figur 2 dargestellten Schaufelgittersegments 200 hat eine an die Druckseite 21 des ersten Schaufelblatts 20 heranreichende erste Erhebung 210 mit einem höchsten Punkt 211 sowie eine an die Saugseite 32 des zweiten Schaufelblatts 30 heranreichende zweite Erhebung 220. Die erste und die zweite Erhebung 210, 220 des in der Figur 2 gezeigten exemplarischen erfindungsgemäßen Schaufelgittersegments 200 sind im gezeigten Beispiel wie die in der Figur 1 dargestellte erste bzw. zweite Erhebung 110, 120 ausgebildet und werden daher nicht näher beschrieben; es versteht sich, dass gleichwohl auch andere Ausbildungen im Rahmen der vorliegenden Erfindung möglich sind.

Das Schaufelgittersegment 200 weist an der Plattformoberfläche 12 zudem eine Vertiefung 230 auf, die in der Figur ebenfalls durch Höhenlinien gekennzeichnet ist und die stromab der zweiten Erhebung 220 an die Saugseite 32 des zweiten Schaufelblattes 30 heranreicht; im gezeigten Beispiel fußt ein Abschnitt des zweiten Schaufelblattes an dessen Saugseite 32 sogar in der Vertiefung 230.

Wie in Figur 2 gezeigt ist, kann ein axialer Abschnitt der Vertiefung 230 in Umfangsrichtung zwischen der ersten Erhebung 210 und der zweiten Erhebung 220 liegen.

Die Vertiefung weist einen tiefsten Punkt 231 auf. Dessen axiale Position 231a hat von der axialen Position 211a des höchsten Punktes 211 der ersten Erhebung 210 einen Abstand d₂. Im gezeigten Ausführungsbeispiel gilt dabei d₂ ≤ g/10, so dass der tiefste Punkt 231 der Vertiefung sich also in axialer Richtung um höchstens 10% der axialen Gitterbreite g vom höchsten Punkt 211 der ersten Erhebung 210 unterscheidet.

Eine Begrenzung 232 der Vertiefung 230 auf Nullniveau ist in der Figur 2 durch eine gepunktete Linie gekennzeichnet. Wie aus der Figur 2 ersichtlich ist, liegt ein am weitesten stromauf liegender Punkt 234 der Begrenzung stromab der Anströmkanten 23, 33 der Schaufelblätter 20, 30, der axiale Abstand von den Anströmkanten beträgt vorliegend jedoch nicht mehr als 5% der axialen Gitterbreite g.

Offenbart ist ein Schaufelgittersegment 100, 200 eines Schaufelgitters einer Strömungsmaschine, das eine Plattform 10 mit einer Plattformoberfläche 12 sowie ein erstes Schaufelblatt 20 und ein zweites Schaufelblatt 30 umfasst. Die Plattformoberfläche weist eine bis zur Druckseite 21 des ersten Schaufelblattes 20 reichende erste Erhebung 110, 210 und eine bis zur Saugseite 32 des zweiten Schaufelblattes 30 reichende zweite Erhebung (120, 220) auf. Ein am weitesten stromab liegender Punkt 123 einer (auf Nullniveau liegenden) Begrenzung 122 der zweiten Erhebung 120, 220 hat eine axiale Position 123a, die sich von der axialen Position 111a mindestens eines höchsten Punktes 111 der ersten Erhebung 110, 210 um maximal 10% der axialen Gitterbreite g unterscheidet.

Offenbart sind ferner ein Schaufelgitter, ein Schaufelkanal, eine Plattform, eine Strömungsmaschine und ein Flugzeugtriebwerk.

### Bezugszeichen

- 100, 200: Schaufelgittersegment

- 10: Plattform
- 10a: anströmseitige Plattformkante
- 10b: abströmseitige Plattformkante
- 12: Plattformoberfläche
- 20: erstes Schaufelblatt
- 21: Druckseite des ersten Schaufelblatts 20
- 23, 33: Anströmkante
- 24, 34: Abströmkante
- 30: zweites Schaufelblatt
- 32: Saugseite des zweiten Schaufelblatts 30

- 110, 210: erste Erhebung
- 111, 211: höchster Punkt der ersten Erhebung
- 111a, 211a: axiale Position des höchsten Punktes der ersten Erhebung
- 112: Begrenzung der ersten Erhebung
- 113: am weitesten stromab liegender Punkt der Begrenzung 112
- 113a: axiale Position des Punktes 113
- 114: am weitesten stromauf liegender Punkt der Begrenzung 112
- 114a: axiale Position des Punktes 114
- 120, 220: zweite Erhebung
- 121: höchster Punkt der zweiten Erhebung
- 122: Begrenzung der zweiten Erhebung
- 123: am weitesten stromab liegender Punkt der Begrenzung 122
- 123a: axiale Position des Punktes 123

- 230: Vertiefung
- 231: tiefster Punkt der Vertiefung
- 231a: axiale Position des tiefsten Punktes der Vertiefung
- 232: Begrenzung der Vertiefung
- 234: am weitesten stromauf liegender Punkt der Vertiefung

- a₁: axiale Ausdehnung der ersten Erhebung
- a₂: axiale Ausdehnung der zweiten Erhebung
- d₁: axialer Abstand der axialen Positionen 111a und 123a voneinander
- d₂: axialer Abstand der axialen Positionen 231a und 211a voneinander

- g: axiale Gitterbreite
- t: Teilung sab stand

- D₁: in Umfangsrichtung gemessener Abstand des höchsten Punktes 111 von der Druckseite des ersten Schaufelblattes
- D₂: in Umfangsrichtung gemessener Abstand des höchsten Punktes 121 von der Saugseite des zweiten Schaufelblattes
- U: Umfangsrichtung
- X: vorgesehene axiale Hauptstromrichtung
- Z: Schaufelzwischenstreifen

## Patentansprüche

1. Schaufelgittersegment (100, 200) eines Schaufelgitters für eine Strömungsmaschine, wobei das Schaufelgittersegment eine Plattform (10) mit einer Plattformoberfläche (12) sowie ein erstes Schaufelblatt (20) und ein zweites Schaufelblatt (30) umfasst, **dadurch gekennzeichnet, dass** die Plattformoberfläche eine bis an die Druckseite (21) des ersten Schaufelblattes (20) heranreichende erste Erhebung (110, 210) und eine bis an die Saugseite (32) des zweiten Schaufelblattes (30) heranreichende zweite Erhebung (120, 220) aufweist
und wobei eine Begrenzung (122) der zweiten Erhebung (120, 220) mindestens einen am weitesten stromab liegenden Punkt (123) aufweist, dessen axiale Position (123a) sich von einer axialen Position (111a) mindestens eines höchsten Punktes (111) der ersten Erhebung (110, 210) um maximal 10% einer axialen Gitterbreite (g) des Schaufelgittersegments unterscheidet.

2. Schaufelgittersegment nach Anspruch 1, wobei eine Begrenzung (112) der ersten Erhebung (110, 210)
- mindestens einen am weitesten stromab liegenden Punkt (113) aufweist, der mindestens 50% und/oder höchstens 85% der axialen Gitterbreite (g) stromab der Anströmkanten (23, 33) der Schaufelblätter (20, 30) angeordnet ist und/oder
- mindestens einen am weitesten stromauf liegenden Punkt (114) aufweist, der höchstens 10% oder höchstens 5% der axialen Gitterbreite (g) stromab der Anströmkanten (23, 33) der Schaufelblätter (20, 30) angeordnet ist.

3. Schaufelgittersegment nach einem der Ansprüche 1 oder 2, wobei die Begrenzung (122) der zweiten Erhebung (120, 220) mindestens einen am weitesten stromauf liegenden Punkt aufweist, dessen axiale Position höchstens 10% oder höchstens 5% der axialen Gitterbreite (g) stromab der Anströmkanten (23, 33) der Schaufelblätter (20, 30) angeordnet ist.

4. Schaufelgittersegment gemäß einem der vorhergehenden Ansprüche, wobei eine axiale Ausdehnung (a₁) der ersten Erhebung (110, 210) mindestens doppelt so groß ist wie eine axiale Ausdehnung (a₂) der zweiten Erhebung (120, 220).

5. Schaufelgittersegment nach einem der vorhergehenden Ansprüche, wobei
- ein in Umfangsrichtung (U) gemessener Abstand (D₁) des mindestens einen höchsten Punktes (111) der ersten Erhebung (110, 210) von der Druckseite (21) des ersten Schaufelblattes (20) und/oder
- ein in Umfangsrichtung (U) gemessener Abstand (D₂) mindestens eines höchsten Punktes (121) der zweiten Erhebung (120, 220) von der Saugseite (32) des zweiten Schaufelblattes (20)
höchstens 10% oder höchstens 5% eines Teilungsabstandes (t) des Schaufelgittersegments beträgt.

6. Schaufelgittersegment nach einem der vorhergehenden Ansprüche, wobei eine maximale Ausdehnung der ersten Erhebung (110, 210) in Umfangsrichtung (U)
- höchstens zwei Drittel oder höchstens die Hälfte eines Teilungsabstandes (t) des Schaufelgittersegments beträgt und/oder
- mindestens ein Viertel oder mindestens ein Drittel des Teilungsabstandes (t) des Schaufelgittersegments beträgt.

7. Schaufelgittersegment nach einem der vorhergehenden Ansprüche, wobei eine Ausdehnung der zweiten Erhebung in Umfangsrichtung höchstens ein Fünftel oder höchstens ein Neuntel eines Teilungsabstandes (t) des Schaufelgittersegments beträgt.

8. Schaufelgittersegment nach einem der vorhergehenden Ansprüche, wobei die Plattformoberfläche eine Vertiefung (230) aufweist, die stromab der zweiten Erhebung (220) an die Saugseite (32) des zweiten Schaufelblattes (30) heranreicht.

9. Schaufelgittersegment gemäß Anspruch 8, wobei eine axiale Position (231a) mindestens eines tiefsten Punktes (231) der Vertiefung (230) sich von der axialen Position (211a) mindestens eines höchsten Punktes (211) der ersten Erhebung (210) um maximal 15% oder maximal 10% der axialen Gitterbreite (g) unterscheidet.

10. Schaufelgittersegment gemäß einem der Ansprüche 8 oder 9, wobei ein am weitesten stromauf liegender Punkt (234) einer Begrenzung (232) der Vertiefung höchstens 5% der axialen Gitterbreite stromab der Anströmkanten (23, 33) der Schaufelblätter (20, 30) liegt, im Wesentlichen eine mit den Anströmkanten (23, 33) gemeinsame axiale Position hat oder sogar stromauf der Anströmkanten (23, 33) der Schaufelblätter (20, 30) angeordnet ist und dabei insbesondere bin an die anströmseitige plattformkante (10a) heranreichen kann.

11. Schaufelgittersegment gemäß einem der vorhergehenden Ansprüche, wobei das Schaufelgitter ein Leitschaufelgitter oder ein Laufschaufelgitter ist.

12. Schaufelgitter für eine Strömungsmaschine, das mindestens ein Schaufelgittersegment (100, 200) nach einem der vorangehenden Ansprüche umfasst.

13. Schaufelkanal einer Strömungsmaschine, der durch ein Schaufelgittersegment (100, 200) nach einem Ansprüche 1 bis 11 sowie durch eine der Plattform (10) des Schaufelgittersegments gegenüberliegende Seitenwand begrenzt ist.

14. Plattform (10) für ein Schaufelgittersegment (100, 200) gemäß einem der Ansprüche 1 bis 11, wobei die Plattform dazu eingerichtet ist, in Umfangsrichtung (U) an die mindestens zwei Schaufelblätter (20, 30) anzugrenzen.

15. Strömungsmaschine mit mindestens einem Schaufelgitter gemäß Anspruch 12.

## Claims

1. Blade cascade segment (100, 200) of a blade cascade for a turbomachine, the blade cascade segment comprising a platform (10) having a platform surface (12), and a first airfoil (20) and a second airfoil (30),
**characterized in that**
the platform surface has a first elevation (110, 210) which extends as far as the pressure side (21) of the first airfoil (20), and a second elevation (120, 220) which extends as far as the suction side (32) of the second airfoil (30),
and a boundary (122) of the second elevation (120, 220) having at least one furthest downstream point (123), the axial position (123a) of which differs from an axial position (111a) of at least one highest point (111) of the first elevation (110, 210) by at most 10% of an axial cascade width (g) of the blade cascade segment.

2. Blade cascade segment according to claim 1, wherein a boundary (112) of the first elevation (110, 210)
- has at least one furthest downstream point (113) which is arranged at least 50% and/or at most 85% of the axial cascade width (g) downstream of the leading edges (23, 33) of the airfoils (20, 30), and/or
- has at least one furthest upstream point (114) which is arranged at most 10% or at most 5% of the axial cascade width (g) downstream of the leading edges (23, 33) of the airfoils (20, 30).

3. Blade cascade segment according to either claim 1 or claim 2, wherein the boundary (122) of the second elevation (120, 220) has at least one furthest upstream point, the axial position of which is arranged at most 10% or at most 5% of the axial cascade width (g) downstream of the leading edges (23, 33) of the airfoils (20, 30).

4. Blade cascade segment according to any of the preceding claims, wherein an axial extension (a₁) of the first elevation (110, 210) is at least twice as large as an axial extension (a₂) of the second elevation (120, 220).

5. Blade cascade segment according to any of the preceding claims, wherein
- a distance (D₁) of the at least one highest point (111) of the first elevation (110, 210) from the pressure side (21) of the first airfoil (20), which distance is measured in the circumferential direction (U), and/or
- a distance (D₂) of the at least one highest point (121) of the second elevation (120, 220) from the suction side (32) of the second airfoil (20), which distance is measured in the circumferential direction (U),
is at most 10% or at most 5% of a pitch distance (t) of the blade cascade segment.

6. Blade cascade segment according to any of the preceding claims, wherein a maximum extension of the first elevation (110, 210) in the circumferential direction (U)
- is at most two thirds or at most half of a pitch distance (t) of the blade cascade segment, and/or
- is at least one quarter or at least one third of the pitch distance (t) of the blade cascade segment.

7. Blade cascade segment according to any of the preceding claims, wherein an extension of the second elevation in the circumferential direction is at most one fifth or at most one ninth of a pitch distance (t) of the blade cascade segment.

8. Blade cascade segment according to any of the preceding claims, wherein the platform surface has a recess (230) which extends downstream of the second elevation (220) as far as the suction side (32) of the second airfoil (30).

9. Blade cascade segment according to claim 8, wherein an axial position (231a) of at least one deepest point (231) of the recess (230) differs from the axial position (211a) of at least one highest point (211) of the first elevation (210) by at most 15% or at most 10% of the axial cascade width (g).

10. Blade cascade segment according to either claim 8 or claim 9, wherein a furthest upstream point (234) of a boundary (232) of the recess is at most 5% of the axial cascade width downstream of the leading edges (23, 33) of the airfoils (20, 30), substantially has an axial position which is common with the leading edges (23, 33), or is even arranged upstream of the leading edges (23, 33) of the airfoils (20, 30), and, in this case, in particular can extend as far as the upstream platform edge (10a).

11. Blade cascade segment according to any of the preceding claims, wherein the blade cascade is a guide vane cascade or a rotor blade cascade.

12. Blade cascade for a turbomachine, comprising at least one blade cascade segment (100, 200) according to any of the preceding claims.

13. Blade channel of a turbomachine that is delimited by a blade cascade segment (100, 200) according to any of claims 1 to 11, and by a lateral wall which is opposite the platform (10) of the blade cascade segment.

14. Platform (10) for a blade cascade segment (100, 200) according to any of claims 1 to 11, wherein the platform is designed to be adjacent to the at least two airfoils (20, 30) in the circumferential direction (U).

15. Turbomachine having at least one blade cascade according to claim 12.

## Revendications

1. Segment de grille d'aubes (100, 200) d'une grille d'aubes pour une turbomachine, le segment de grille d'aubes comprenant une plate-forme (10) ayant une surface de plate-forme (12), et une première pale (20) ainsi qu'une seconde pale (30),
**caractérisé en ce que**
la surface de plate-forme présente une première élévation (110, 210) s'étendant jusqu'au côté pression (21) de la première pale (20) et une seconde élévation (120, 220) s'étendant jusqu'au côté aspiration (32) de la seconde pale (30),
et dans lequel une limite (122) de la seconde élévation (120, 220) présente au moins un point (123) situé le plus en aval, dont la position axiale (123a) diffère d'une position axiale (111a) d'au moins un point le plus haut (111) de la première élévation (110, 210) d'une valeur maximale de 10 % d'une largeur axiale de grille (g) du segment de grille d'aubes.

2. Segment de grille d'aubes selon la revendication 1, dans lequel une limite (112) de la première élévation (110, 210) présente
- au moins un point (113) situé le plus en aval, qui est disposé au moins à 50 % et/ou au plus à 85 % de la largeur de grille axiale (g) en aval des bords d'attaque (23, 33) des pales (20, 30), et/ou
- au moins un point (114) situé le plus en amont, qui est disposé au plus à 10 % ou au plus à 5 % de la largeur de grille axiale (g) en aval des bords d'attaque (23, 33) des pales (20, 30).

3. Segment de grille d'aubes selon l'une des revendications 1 ou 2, dans lequel la limite (122) de la seconde élévation (120, 220) présente au moins un point situé le plus en amont, dont la position axiale est située au plus à 10 % ou au plus à 5 % de la largeur de grille axiale (g) en aval des bords d'attaque (23, 33) des pales (20, 30).

4. Segment de grille d'aubes selon l'une des revendications précédentes, dans lequel une extension axiale (a₁) de la première élévation (110, 210) est au moins deux fois plus grande qu'une extension axiale (a₂) de la seconde élévation (120, 220).

5. Segment de grille d'aubes selon l'une des revendications précédentes, dans lequel
- une distance (D₁), mesurée dans la direction circonférentielle (U), entre l'au moins un point le plus haut (111) de la première élévation (110, 210) et le côté pression (21) de la première pale (20), et/ou
- une distance (D₂), mesurée dans la direction circonférentielle (U), entre l'au moins un point le plus haut (121) de la seconde élévation (120, 220) et le côté aspiration (32) de la seconde pale (20)
est de 10 % au plus ou de 5 % au plus d'une distance de pas (t) du segment de grille d'aubes.

6. Segment de grille d'aubes selon l'une des revendications précédentes, dans lequel une extension maximale de la première élévation (110, 210) dans la direction circonférentielle (U) est égale
- au plus aux deux tiers ou au plus à la moitié d'une distance de pas (t) du segment de grille d'aubes, et/ou
- au moins à un quart ou au moins à un tiers de la distance de pas (t) du segment de grille d'aubes.

7. Segment de grille d'aubes selon l'une des revendications précédentes, dans lequel une extension de la seconde élévation dans la direction circonférentielle est égale au plus à un cinquième ou au plus à un neuvième d'une distance de pas (t) du segment de grille d'aubes.

8. Segment de grille d'aubes selon l'une des revendications précédentes, dans lequel la surface de plate-forme comporte un évidement (230) s'étendant en aval de la seconde élévation (220) jusqu'au côté aspiration (32) de la seconde pale (30).

9. Segment de grille d'aubes selon la revendication 8, dans lequel une position axiale (231a) d'au moins un point le plus bas (231) de l'évidement (230) diffère de la position axiale (211a) d'au moins un point le plus haut (211) de la première élévation (210) d'une valeur maximale de 15 % ou d'une valeur maximale de 10 % de la largeur de grille axiale (g).

10. Segment de grille d'aubes selon l'une des revendications 8 ou 9, dans lequel un point (234) le plus en amont d'une limite (232) de l'évidement est situé au plus à 5 % de la largeur de grille axiale en aval des bords d'attaque (23, 33) des pales (20, 30), présente sensiblement une position axiale commune aux bords d'attaque (23, 33) ou est même disposé en amont des bords d'attaque (23, 33) des pales (20, 30) et peut notamment s'étendre jusqu'au bord de plate-forme (10a) du côté du bord d'attaque.

11. Segment de grille d'aubes selon l'une des revendications précédentes, dans lequel la grille d'aubes est une grille d'aubes directrice ou une grille d'aubes mobile.

12. Grille d'aubes pour une turbomachine, comprenant au moins un segment de grille d'aubes (100, 200) selon l'une des revendications précédentes.

13. Canal d'aubes d'une turbomachine, qui est délimité par un segment de grille d'aubes (100, 200) selon l'une des revendications 1 à 11 et par une paroi latérale opposée à la plate-forme (10) du segment de grille d'aubes.

14. Plate-forme (10) pour un segment de grille d'aubes (100, 200) selon l'une des revendications 1 à 11, la plate-forme étant conçue pour être adjacente aux au moins deux pales (20, 30) dans la direction circonférentielle (U).

15. Turbomachine comportant au moins une grille d'aubes selon la revendication 12.
